# FASCICULE DE BREVET EUROPEEN

(11) **EP 2 917 791 B1**
(45) Date de publication et mention de la délivrance du brevet: **22.11.2017**
(21) Numéro de dépôt: 13766360.5
(22) Date de dépôt: 25.09.2013
(51) Int. Cl.: G04B 37/22

(54) **COMPOSANT D'HABILLAGE D'HORLOGERIE BI-MÉTAL SOUDÉ**
GESCHWEISSTE BIMETALL-UHRVERKLEIDUNGSKOMPONENTE
SOLDERED BI-METAL CLOCK-COVERING COMPONENT

(30) Priorité: 06.11.2012 EP 12191479
(43) Date de publication de la demande: 16.09.2015
(73) Titulaire: The Swatch Group Research and Development Ltd., 2074 Marin (CH)
(72) Inventeur: KNUCHEL, Daniel, CH-2502 Biel (CH)
(74) Mandataire: Giraud, Eric
(86) Numéro de dépôt international: PCT/EP2013/070014
(87) Numéro de publication internationale: WO 2014/072121

(56) Documents cités:
- CH-A- 30 607
- CH-A- 264 968
- CH-A- 632 377
- CH-A- 652 560
- FR-A- 926 715
- GB-A- 1 406 909
- JP-A- S60 228 666

## Description

### Domaine de l'invention

L'invention concerne un procédé de fabrication d'un composant d'habillage d'horlogerie, dans lequel :
- on se munit d'une embase métallique réalisée en un premier matériau qui est du titane ou/et un premier alliage de titane,
- on se munit d'au moins une plaque de recouvrement métallique réalisée dans un deuxième matériau, ledit deuxième matériau comportant un deuxième métal choisi parmi l'or et le platine et le palladium ou/et un deuxième alliage comportant au moins de l'or ou du platine ou du palladium.

L'invention concerne encore un composant d'habillage d'horlogerie, en matériau bi-métallique comportant une embase métallique réalisée en un premier matériau comportant du titane ou/et un premier alliage de titane, et au moins une plaque de recouvrement métallique réalisée dans un deuxième matériau comportant un deuxième métal choisi parmi l'or et le platine et le palladium ou/et un deuxième alliage comportant au moins de l'or ou du platine ou du palladium.

L'invention concerne encore une pièce d'horlogerie, notamment une montre, comportant au moins un tel composant d'habillage.

L'invention concerne le domaine de l'horlogerie, de la joaillerie, et de la bijouterie.

### Arrière-plan de l'invention

La fabrication de composants d'habillage d'horlogerie est souvent réalisée en métaux nobles, tels qu'or ou platine, de façon à assurer une excellente résistance à la corrosion. Toutefois ces métaux sont de densité élevée, et les pièces d'horlogerie ainsi réalisées, notamment des montres, sont très lourdes pour l'utilisateur, et de surcroît d'un coût de revient élevé. Un matériau comme l'or est malléable, et ses qualités mécaniques sont moyennes, ce qui oblige, bien souvent, à sélectionner des alliages d'or plus résistants, mais aussi plus sensibles à la corrosion, avec des variations d'aspect dans le temps.

Le document JP 60 228 666 A CITIZEN décrit le brasage de composants en or ou alliage d'or sur une base en titane ou alliage de titane. Ce procédé utilise une surface en TiN obtenue par nitruration pour stopper la pénétration de l'or dans le titane, et forme au préalable une couche Ni-Pd ou Ni-Cu.

Le document FR 926 715 A PEDERSEN décrit un damasquinage avec création préalable d'une rainure dans un premier composant, qu'on élève à une température supérieure à la température de fusion d'un métal d'apport formant un ornement, avant de déposer ou de couler ce métal d'apport dans la rainure à l'état fondu. Dans la mesure où la température n'est pas nécessairement élevée au-dessus des températures de fusion du métal du premier composant et du métal d'apport, il s'agit de brasage. L'ensemble peut être mis en forme par emboutissage après assemblage et brasage.

Le document CH 264 968 A BOITES LA CENTRALE décrit la fixation par brasage d'une coquille en métal noble sur une pièce de support en métal vil.

Le document GB 1 406 909 A SUWA SEIKOSHA décrit le recouvrement, par une technique de pulvérisation, d'un revêtement en matériau métallique ou non-métallique sur un corps de base qui peut être en titane.

Le document CH 30 607 A THIEBAUD décrit une boîte de montre en doublé, avec des feuilles d'or plaquées de part et d'autre d'une partie en métal non précieux, dont les chants sont munis d'un bord plat en or massif, cachant entièrement le métal de base. Ce bord plat est soudé sur le chant du doublé.

Le document CH 652 560 A PRECIMAX décrit une lunette de montre en deux parties, inférieure ben titane, supérieure en or, assemblées mécaniquement.

Le document CH 632 377 A GRANDJEAN décrit un autre procédé ressemblant au damasquinage, dans le cas particulier d'un support en acier inoxydable, dans lequel on réalise une creusure. On élève la température du support à une température voisine de la « température idéale de soudure » de l'acier inoxydable concerné, et supérieure à la température de fusion d'un métal d'ornement, typiquement de l'or, qu'on dépose dans la creusure sous forme de débris solides, le métal d'ornement fondant et remplissant la creusure, constituant de ce fait un brasage.

### Résumé de l'invention

L'invention se propose d'offrir une alternative à l'utilisation de composants d'habillage d'horlogerie entièrement réalisés en métaux nobles_

A cet effet, l'invention concerne un procédé de fabrication d'un composant d'habillage d'horlogerie, selon la revendication 1.

Dans une application particulière de ce procédé à la réalisation d'un dit composant d'habillage qui est une griffe de boîte de montre:
- on découpe une embase en titane ou en alliage de titane, à partir d'une feuille ou planche, avec des découpes et des ouvertures traversantes, de façon à former une structure en échelle avec des surfaces d'appui latérales reliées par des traverses;
- on plie lesdites traverses de façon à former des étriers,
- on soude deux plaques de recouvrement en or sur lesdites surfaces d'appui latérales de ladite embase, pour former une ébauche bi-métallique;
- on découpe un tronçon de ladite ébauche bi-métallique;
- on conforme ledit tronçon par déformation pour constituer ladite griffe.

L'invention concerne encore un composant d'habillage d'horlogerie selon la revendication 20.

L'invention concerne encore une pièce d'horlogerie, notamment une montre, comportant au moins un tel composant d'habillage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en perspective, un composant d'habillage selon l'invention, avec une plaque de recouvrement soudée sur une embase en profilé ;
- la figure 2 représente, de façon schématisée et en perspective, un composant d'habillage selon l'invention, avec une plaque de recouvrement soudée sur une embase et emboutie avec elle après soudage ;
- la figure 3 représente, de façon schématisée et en perspective, un composant d'habillage selon l'invention, avec une plaque de recouvrement comportant une découpe et soudée sur une embase en profilé au niveau d'une partie seulement de la surface inférieure de la plaque de recouvrement faisant face à cette embase;
- la figure 4 représente, de façon schématisée et en perspective, une ébauche bi-métallique selon l'invention, avec une plaque de recouvrement comportant une ouverture traversante et soudée sur une embase, et la figure 5 représente, en coupe transversale, un composant d'habillage obtenu par parachèvement de l'ébauche bi-métallique de la figure 4, avec formation du profil extérieur par emboutissage et/ou usinage, et usinage après soudage d'une ouverture, de façon à constituer, par exemple, une lunette de montre;
- la figure 6 représente, de façon schématisée et en perspective, un composant d'habillage selon l'invention, avec une plaque de recouvrement comportant des alésages de positionnement et des ouvertures traversantes, soudée sur une embase comportant des pions de positionnement en correspondance avec les alésages de la plaque;
- la figure 7 représente, de façon schématisée et en section transversale, un composant d'habillage analogue à celui de la figure 2, avec un embouti profond réalisé après soudage ;
- la figure 8 représente, de façon schématisée et en perspective, un composant d'habillage selon l'invention, avec une plaque de recouvrement soudée sur une embase en profilé au niveau d'une partie seulement de la surface inférieure de la plaque de recouvrement faisant face à cette embase;
- la figure 9 représente, de façon schématisée et en perspective, un composant d'habillage selon l'invention, analogue à celui de la figure 8 et comportant des découpes d'usinage en forme de H réalisées sur l'ensemble après soudage ;
- la figure 10 représente, de façon schématisée et en perspective, un composant d'habillage selon l'invention, avec deux plaques de recouvrement soudées sur une même embase en profilé au niveau d'une partie seulement de la surface inférieure de la plaque de recouvrement faisant face à cette embase;
- la figure 11 représente, de façon schématisée et en perspective, un composant d'habillage selon l'invention, analogue à la figure 10, et dont quatre ailes latérales sont galbées par emboutissage après soudage ;
- la figure 12 représente, de façon schématisée et en section transversale, un composant d'habillage selon l'invention, comportant deux plaques de recouvrement en alliage d'or ou de platine ou de palladium soudées de part et d'autre d'une embase en titane ou en alliage de titane ;
- la figure 13 représente, sous forme d'un schéma-blocs, le procédé de fabrication d'un composant selon l'invention :

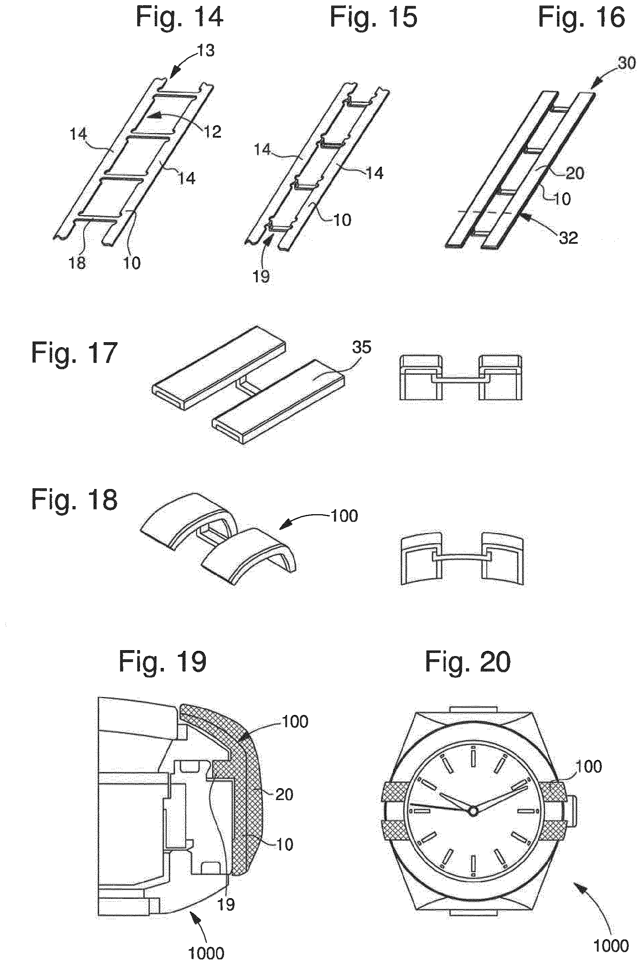

- les figures 14 à 20 illustrent la fabrication de griffes pour montre: la figure 14 montre, en perspective la préparation d'une embase en titane, avec des découpes et des ouvertures traversantes, la figure 15 montre le pliage préalable de cette embase pour transformer en étrier des traverses venues de découpe à la première opération, la figure 16 montre l'ébauche bi-métallique après soudage de plaques de recouvrement en or sur certaines surfaces de l'embase, la figure 17 montre, en perspective et en vue de bout, un tronçon obtenu par sciage de cette ébauche, lequel est ensuite conformé par déformation pour constituer le composant d'habillage représenté à la figure 18, en l'occurrence une griffe, montrée en position sur une boîte de montre aux figures 19 en section transversale, et en figure 20 en vue en plan ;
- les figures 21 et 22 représentent, en coupe, l'assemblage d'une plaque de recouvrement et d'une embase, avant et après sertissage au niveau d'un profil en tenon de l'embase coopérant avec un profil en mortaise de la plaque de recouvrement ;
- la figure 23 représente, en coupe, une plaque de recouvrement déjà sertie sur une embase, et visualise des zones de soudage entre cuir et chair aux surfaces de jonction.

### Description détaillée des modes de réalisation préférés

L'invention se propose d'offrir une alternative à l'utilisation de composants d'habillage d'horlogerie entièrement réalisés en métaux nobles, notamment en alliage d'or ou de platine ou de palladium, et donc très lourds pour l'utilisateur, et d'un coût de revient élevé.

En particulier dans le cas de composants de montres, qui constituent l'application préférentielle de l'invention, même si celle-ci est directement applicable pour des composants de bijouterie ou de joaillerie, les composants d'habillage doivent présenter une excellente résistance à la corrosion, tout en ayant de bonnes qualités mécaniques.

L'invention se propose de combiner, sur un même composant d'habillage, les avantages de haute tenue mécanique d'un premier constituant, ci-après dénommé « embase », choisi dans un matériau sélectionné à la fois pour sa tenue mécanique et sa résistance à la corrosion, et les avantages d'aspect et de haute résistance à la corrosion d'au moins un deuxième constituant, ci-après dénommé « plaque de recouvrement ». L'invention concerne des composants massifs, dont l'épaisseur E de chaque constituant est, de préférence, supérieure à 0,5 millimètre.

En effet, comme on le voit dans la suite de l'exposé, l'invention incorpore une opération de soudage. Cette opération est d'autant mieux maîtrisable que les composants à souder ensemble sont épais, et d'épaisseur comparable. Naturellement, l'invention peut encore être mise en oeuvre avec des épaisseurs de constituants plus basses, par exemple supérieures à 0,2 millimètre.

Ainsi, l'invention concerne un procédé de fabrication d'un composant d'habillage 100 d'horlogerie. Selon ce procédé :
- on se munit d'une embase 10 métallique réalisée en un premier matériau comportant du titane ou/et un premier alliage de titane,
- on se munit d'au moins une plaque de recouvrement 20 métallique réalisée dans un deuxième matériau, ce deuxième matériau comportant un deuxième métal choisi parmi l'or et le platine et le palladium ou/et un deuxième alliage comportant au moins de l'or ou du platine ou du palladium.

Selon l'invention :
- on réalise cette au moins une plaque de recouvrement 20 avec une épaisseur E supérieure ou égale à 0,5 millimètre ;
- on soude cette au moins une plaque de recouvrement 20 sur cette embase 10 de façon à former une ébauche bi-métallique 30, en portant la plaque de recouvrement 20 et l'embase 10 à une température supérieure à la température de fusion de la plaque de recouvrement 20 et à la température de fusion de l'embase 10;
- on conforme ou/et on usine cette ébauche bi-métallique 30 pour donner audit composant de structure 100 sa forme finale.

Dans une mise en oeuvre particulière, on se munit d'une telle embase 10 plate avant son opération de soudage, et on se munit d'une telle plaque de recouvrement 20 plate avant son opération de soudage, et on effectue à plat l'opération de soudage entre l'embase 10 et la plaque de recouvrement 20.
De préférence, on choisit ce premier alliage et ce deuxième alliage avec un taux de nickel nul.

En ce qui concerne l'embase 10, on choisit avantageusement pour ce premier matériau de cette embase 10 du titane « grade 2 » ou du titane « grade 5 » ou du titane « T35 ». Le titane « grade 2 » est particulièrement approprié à une soudure de qualité avec un alliage d'or 18 carats. Le titane et ses alliages constituent une famille présentant des qualités mécaniques analogues à celles des aciers, pour une masse très inférieure à celle des aciers, en même temps qu'une très bonne résistance à la corrosion, notamment au brouillard salin.

De préférence, on choisit pour ce deuxième matériau un alliage d'or 18 carats ou un alliage de platine avec au moins 95% de platine ou un alliage de palladium avec au moins 75% de palladium.

Quand il s'agit d'un alliage d'or, on choisit avantageusement pour ce deuxième matériau un alliage d'or 18 carats de type « 5N ».

Le choix du couple particulier or-titane est particulièrement efficace pour limiter la corrosion.

Dans une variante, le deuxième matériau est du palladium ou un alliage de palladium. L'emploi du palladium se prête, comme l'or ou le platine, à une fixation durable de la plaque de recouvrement 20 sur l'embase 1, de façon à former une ébauche bi-métallique 30, par sertissage, ou/et brasage ou/et soudage.

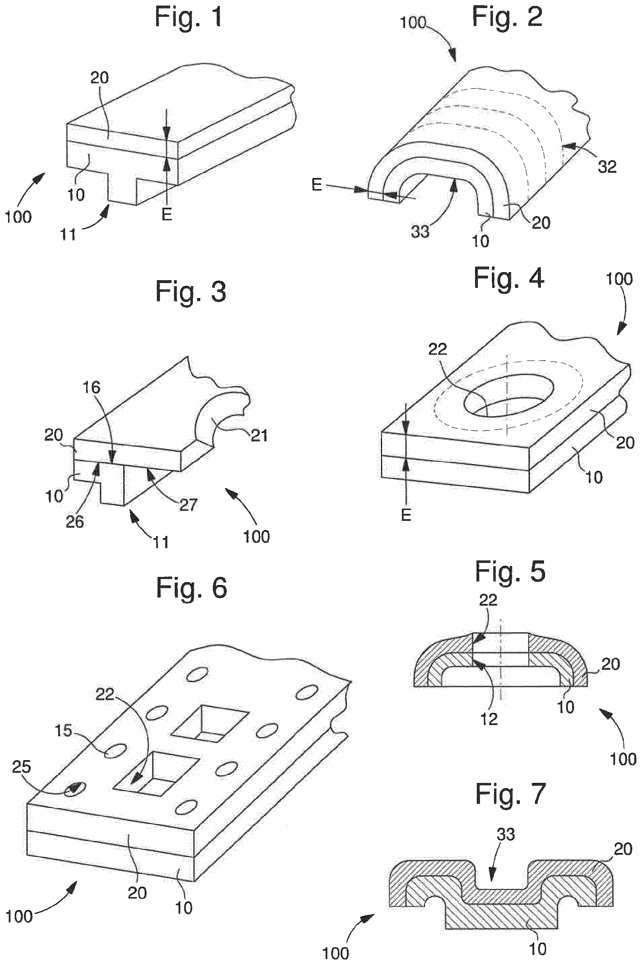

Dans certaines variantes de réalisation, tel que visible par exemple sur la figure 2, on conforme cette ébauche bi-métallique 30 par déformation en étampage ou/et en emboutissage.

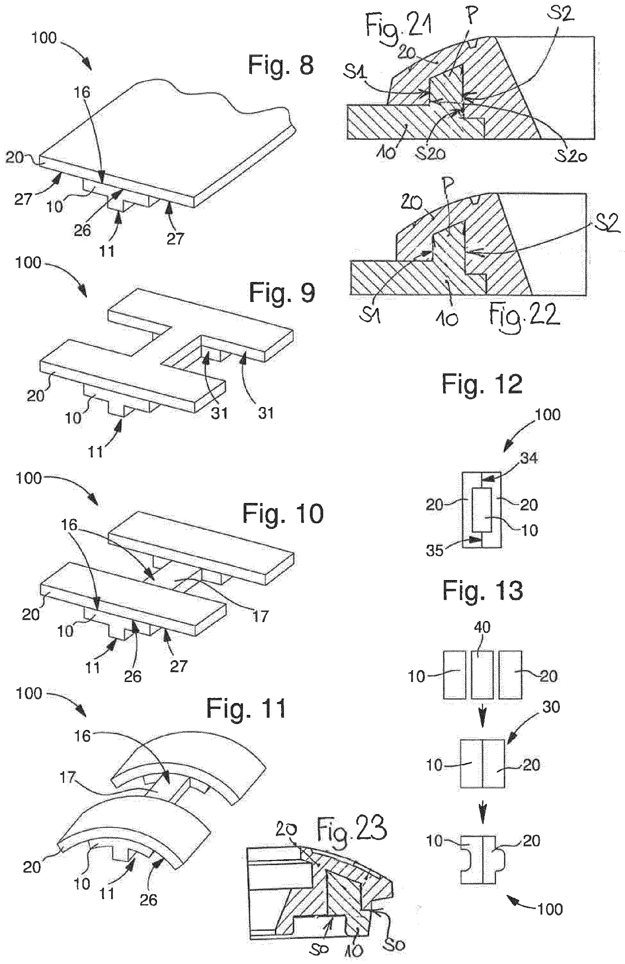

Dans d'autres variantes, comme illustré sur la figure 10 ou 11, on usine cette ébauche bi-métallique 30 pour enlever localement cette plaque de recouvrement 20, de façon à rendre localement visible au moins une surface 16 de l'embase 10.

Dans une réalisation avantageuse pour la fixation du composant 100 sur une montre ou similaire, on choisit avantageusement cette embase 10 sous forme d'un profilé 11.

Dans certaines applications, tel que visible sur la figure 3 ou 4, on choisit cette plaque de recouvrement 20 pré-usinée avec au moins une découpe 21 ou/et ouverture traversante 22.

Pour un positionnement relatif optimal, on prépare avantageusement, avant de les souder l'une sur l'autre, cette embase 10 et cette plaque de recouvrement 20 avec des repères 15, 25, en relief ou/et en creux, tel que visible sur la figure 6, pour leur mise en correspondance géométrique avant cette opération de soudage et pour leur maintien relatif l'une par rapport à l'autre pendant cette opération de soudage.

Dans une variante, tel que visible sur les figures 1, 2, 4, 6, ou 10, on soude cette plaque de recouvrement 20 sur cette embase 10 au niveau de la totalité de leur surface commune de contact.

Dans une variante de réalisation illustrée à la figure 23, on effectue le soudage entre cuir et chair au niveau de la surface de joint S0 entre la plaque de recouvrement 20 et l'embase 10.

Dans une variante de réalisation, on effectue le soudage par laser.

Dans une variante de réalisation, on effectue le soudage par ultra-sons.

Dans une variante avantageuse de réalisation, avant de souder la plaque de recouvrement 20 sur l'embase 10, on exerce sur au moins la plaque de recouvrement 20 ou l'embase 10 une action mécanique de déformation pour son sertissage sur respectivement l'embase 10 ou la plaque de recouvrement 20.

De préférence, on effectue cette action mécanique de déformation sur la plaque de recouvrement 20.

Dans une variante avantageuse de réalisation, tel que visible sur les figures 21 et 22, on réalise un profil en tenon P sur l'embase, destiné à coopérer avec un profil en mortaise de la plaque de recouvrement, ou inversement. Le tenon P de l'embase comporte deux surfaces latérales opposées S1 et S2, la plaque de recouvrement 20 associée comporte deux surfaces S20 de mortaise parallèles. Lors du sertissage les surfaces S20 sont plaquées contre les surfaces S1 et S2 pour pincer la protubérance P, et, ainsi, forment avec elle un ensemble indémontable.

Le sertissage or-titane permet un bon appui de l'or sur le titane, et une géométrie précise, que vient parachever le soudage, qui est facilité par ce bon appui préalable.

L'exemple des figures 4 et 5 montre, de façon simplifiée, la réalisation d'une lunette de montre, avec confection préalable d'une ébauche bi-métallique 30 à partir d'une plaque de recouvrement 20 comportant une ouverture traversante 22 et soudée sur une embase 10. Cette ébauche 30 est ensuite mise en forme par déformation ou/et usinage, avec formation du profil extérieur par emboutissage et/ou usinage, et usinage après soudage d'une ouverture 12 dans l'embase 10 dans le prolongement de l'ouverture 22, ou en reprise de cette ouverture 22 à la fois dans l'embase 10 et dans la plaque de recouvrement 20.

Dans d'autres variantes, on soude cette plaque de recouvrement 20 sur cette embase 10 au niveau d'une partie seulement de la surface 26 de cette plaque de recouvrement 20 faisant face à cette embase 10, ou/et au niveau d'une partie seulement de la surface 16 de cette embase 10 faisant face à cette plaque de recouvrement 20.

On comprend naturellement que la notion de « bi-métallique » n'est pas restrictive, car l'embase 10 peut être réalisée elle-même selon l'invention, et comporter plusieurs couches soudées deux à deux : l'invention s'applique aussi à un composant d'habillage 100 de type sandwich, et comportant deux plaques de recouvrement 20 en alliage d'or ou de platine ou de palladium soudées de part et d'autre d'une embase 10 en titane ou en alliage de titane. Une telle configuration peut être nécessaire pour des contraintes d'aspect. Le noyau en titane garantit la rigidité et un positionnement parfait par rapport aux autres composants de la pièce d'horlogerie. Tel que visible sur la figure 12, les plaques de recouvrement 20 peuvent être jointives entre elles au niveau d'une surface de jonction 34, ou d'un plan de joint si elles sont planes, et être soudées ou soudées or sur or au niveau de la couture 35. L'invention peut, ainsi s'étendre à la fabrication de composants volumineux, réalisés par soudage deux à deux de surfaces antagonistes, l'une en titane ou alliage de titane, et l'autre en or ou platine ou palladium ou alliage d'or ou alliage de platine ou alliage de palladium.

L'invention concerne encore un composant d'habillage 100 d'horlogerie en matériau bi-métallique comportant une embase 10 métallique réalisée en un premier matériau comportant du titane ou/et un premier alliage de titane, et au moins une plaque de recouvrement 20 métallique réalisée dans un deuxième matériau comportant un deuxième métal choisi parmi l'or et le platine et le palladium ou/et un deuxième alliage comportant au moins de l'or ou du platine ou du palladium.

Selon l'invention, la plaque de recouvrement 20 est directement au contact de l'embase 10 au niveau d'au moins une zone soudée de microstructure différente de la microstructure de la plaque de recouvrement 20 et de la microstructure de l'embase 10. Cette embase 10 et cette plaque de recouvrement 20 sont ainsi soudées l'une avec l'autre, et cette plaque de recouvrement 20 est d'une épaisseur E supérieure ou égale à 0,5 millimètre.

L'invention concerne encore une pièce d'horlogerie, notamment une montre 1000, comportant au moins un tel composant d'habillage 100.

Les figures 14 à 20 illustrent un exemple, non limitatif, de fabrication de griffes 100 pour une montre 1000:
- tel que visible sur la figure 14, une embase 10 en titane, est découpée, à partir d'une feuille ou planche, avec des découpes 13 et des ouvertures traversantes 12, de façon à former une structure en échelle avec des surfaces d'appui latérales 14 reliées par des traverses 18 ;
- tel que visible sur la figure 15, ces traverses 18 sont pliées de façon à former des étriers 19, l'embase est alors prête pour recevoir les plaques de recouvrement 20 ;
- deux plaques de recouvrement en or 20 sont soudées sur les surfaces d'appui latérales 14 de l'embase 10, tel que visible sur la figure 16, l'ébauche bi-métallique 30 est ainsi obtenue ;
- la figure 17 montre un tronçon 35 obtenu par sciage ou découpage, le long d'une ligne de sciage 32, de cette ébauche 30 ;
- ce tronçon 35 est ensuite conformé par déformation pour constituer le composant d'habillage 100 représenté à la figure 18, en l'occurrence une griffe, montrée en position sur une boîte de montre aux figures 19 et 20.

L'invention se prête particulièrement bien à la réalisation de composants d'habillage, tels que lunettes, de griffes, de boîtes, de maillons de bracelet, de fermoirs, cette liste n'étant nullement limitative. Elle offre à l'utilisateur des composants de haute qualité, avec une combinaison de métaux nobles utilisés en forte épaisseur et soudés sur des alliages ou métaux plus légers, garantissant la résistance aux déformations et aux contraintes mécaniques, tout en procurant un allègement plus agréable au porter.

## Revendications

1. Procédé de fabrication d'un composant d'habillage (100) d'horlogerie, dans lequel :
- on se munit d'une embase (10) métallique réalisée en un premier matériau qui est du titane ou/et un premier alliage de titane,
- on se munit d'au moins une plaque de recouvrement (20) métallique réalisée dans un deuxième matériau, ledit deuxième matériau comportant un deuxième métal choisi parmi l'or et le platine et le palladium ou/et un deuxième alliage comportant au moins de l'or ou du platine ou du palladium,
**caractérisé en ce que** :
- on réalise ladite au moins une plaque de recouvrement (20) avec une épaisseur (E) supérieure ou égale à 0,5 millimètre ;
- on soude, sans apport de matière, ladite au moins une plaque de recouvrement (20) sur ladite embase (10) de façon à former une ébauche bi-métallique (30), en portant ladite plaque de recouvrement (20) et ladite embase (10) à une température supérieure à la température de fusion de ladite plaque de recouvrement (20) et à la température de fusion de ladite embase (10);
- puis on conforme ou/et on usine ladite ébauche bi-métallique (30) pour donner audit composant de structure (100) sa forme finale.

2. Procédé selon la revendication 1, **caractérisé en ce qu'**on choisit comme dit premier matériau un alliage de titane qui est du titane « grade 2 » ou du titane « grade 5 » ou du titane « T35 ».

3. Procédé selon la revendication 1 ou 2, **caractérisé en ce qu'**on se munit d'une dite embase (10) plate avant son opération de soudage, et on se munit d'une dite plaque de recouvrement (20) plate avant son opération de soudage, et on effectue à plat ladite opération de soudage entre ladite embase (10) et ladite plaque de recouvrement (20).

4. Procédé selon l'une des revendications 1 à 3, **caractérisé en ce qu'**on choisit ledit premier alliage et ledit deuxième alliage avec un taux de nickel nul.

5. Procédé selon l'une des revendications 1 à 4, **caractérisé en ce qu'**on choisit pour ledit deuxième matériau un alliage d'or 18 carats ou un alliage de platine avec au moins 95% de platine ou un alliage de palladium avec au moins 75% de palladium.

6. Procédé selon la revendication 5, **caractérisé en ce qu'**on choisit pour ledit deuxième matériau un alliage d'or 18 carats de type « 5N ».

7. Procédé selon l'une des revendications 1 à 6, **caractérisé en ce qu'**on conforme ladite ébauche bi-métallique (30) par déformation en étampage ou/et en emboutissage.

8. Procédé selon l'une des revendications 1 à 7, **caractérisé en ce qu'**on usine ladite ébauche bi-métallique (30) pour enlever localement ladite plaque de recouvrement (20).

9. Procédé selon l'une des revendications 1 à 8, **caractérisé en ce qu'**on choisit ladite embase (10) sous forme d'un profilé (11).

10. Procédé selon l'une des revendications 1 à 9, **caractérisé en ce qu'**on choisit ladite plaque de recouvrement (20) pré-usinée avec au moins une découpe (21) ou/et ouverture traversante (22).

11. Procédé selon l'une des revendications 1 à 10, **caractérisé en ce qu'**on prépare, avant de les souder l'une sur l'autre, ladite embase (10) et ladite plaque de recouvrement (20) avec des repères (15 ; 25) en relief ou/et en creux pour leur mise en correspondance géométrique avant ladite opération de soudage et pour leur maintien relatif l'une par rapport à l'autre pendant ladite opération de soudage.

12. Procédé selon l'une des revendications 1 à 11, **caractérisé en ce qu'**on soude ladite plaque de recouvrement (20) sur ladite embase (10) au niveau de la totalité de leur surface commune de contact.

13. Procédé selon l'une des revendications 1 à 11, **caractérisé en ce qu'**on soude ladite plaque de recouvrement (20) sur ladite embase (10) au niveau d'une partie seulement de la surface (26) de ladite plaque de recouvrement (20) faisant face à ladite embase (10), ou/et au niveau d'une partie seulement de la surface (16) de ladite embase (10) faisant face à ladite plaque de recouvrement (20).

14. Procédé selon la revendication 13, **caractérisé en ce qu'**on effectue ledit soudage entre cuir et chair au niveau de la surface de joint (S0) entre ladite plaque de recouvrement (20) et ladite embase (10).

15. Procédé selon l'une des revendications 1 à 14, **caractérisé en ce qu'**on effectue ledit soudage par laser.

16. Procédé selon l'une des revendications 1 à 14, **caractérisé en ce qu'**on effectue ledit soudage par ultra-sons.

17. Procédé selon l'une des revendications 1 à 16, **caractérisé en ce que**, avant de souder ladite plaque de recouvrement (20) sur ladite embase (10), on exerce sur au moins ladite plaque de recouvrement (20) ou ladite embase (10) une action mécanique de déformation pour son sertissage sur respectivement ladite embase (10) ou ladite plaque de recouvrement (20).

18. Procédé selon la revendication 17, **caractérisé en ce qu'**on effectue ladite action mécanique de déformation sur ladite plaque de recouvrement (20).

19. Procédé selon l'une des revendications 1 à 18, **caractérisé en ce qu'**on l'applique à la réalisation d'un dit composant d'habillage (100) qui est une griffe de boîte de montre, et que:
- on découpe une embase (10) en titane ou en alliage de titane, à partir d'une feuille ou planche, avec des découpes (13) et des ouvertures traversantes (12), de façon à former une structure en échelle avec des surfaces d'appui latérales (14) reliées par des traverses (18) ;
- on plie lesdites traverses (18) de façon à former des étriers (19),
- on soude deux plaques de recouvrement en or (20) sur lesdites surfaces d'appui latérales (14) de ladite embase (10), pour former une ébauche bi-métallique (30);
- on découpe un tronçon (35) de ladite ébauche bi-métallique (30) ;
- on conforme ledit tronçon (35) par déformation pour constituer ladite griffe (100).

20. Composant d'habillage (100) d'horlogerie, en matériau bi-métallique comportant une embase (10) métallique réalisée en un premier matériau comportant du titane ou/et un premier alliage de titane, et au moins une plaque de recouvrement (20) métallique réalisée dans un deuxième matériau comportant un deuxième métal choisi parmi l'or et le platine et le palladium ou/et un deuxième alliage comportant au moins de l'or ou du platine ou du palladium, **caractérisé en ce que** ledit premier matériau est exempt de nickel, et **en ce que** ladite plaque de recouvrement (20) est directement au contact de ladite embase (10) au niveau d'au moins une zone soudée de microstructure différente de la microstructure de ladite plaque de recouvrement (20) et de la microstructure de ladite embase (10), et caractérisé en ce ladite plaque de recouvrement (20) est d'une épaisseur (E) supérieure ou égale à 0,5 millimètre.

21. Composant d'habillage (100) selon la revendication 20, **caractérisé en ce que** ledit premier matériau est un alliage de titane qui est du titane « grade 2 » ou du titane « grade 5 » ou du titane « T35 ».

22. Composant d'habillage (100) selon la revendication 20 ou 21, comportant deux dites plaques de recouvrement (20) en alliage d'or ou de platine ou de palladium soudées de part et d'autre d'une dite embase (10) en titane ou en alliage de titane.

23. Composant d'habillage (100) selon la revendication 20 ou 21, **caractérisé en ce que** ladite plaque de recouvrement (20) et ladite embase (10) sont soudées l'une avec l'autre au niveau de la totalité de leur surface commune de contact.

24. Composant d'habillage (100) selon la revendication 20 ou 21, **caractérisé en ce que** ladite plaque de recouvrement (20) et ladite embase (10) sont soudées l'une avec l'autre au niveau d'une partie seulement de la surface (26) de ladite plaque de recouvrement (20) faisant face à ladite embase (10), ou/et au niveau d'une partie seulement de la surface (16) de ladite embase (10) faisant face à ladite plaque de recouvrement (20).

25. Composant d'habillage (100) selon l'une des revendications 20 à 24, **caractérisé en ce qu'**il est une griffe de montre.

26. Composant d'habillage (100) selon l'une des revendications 20 à 24, **caractérisé en ce qu'**il est une lunette de montre.

27. Composant d'habillage (100) selon l'une des revendications 20 à 24, **caractérisé en ce qu'**il est une boîte de montre.

28. Composant d'habillage (100) selon l'une des revendications 20 à 24, **caractérisé en ce qu'**il est un maillon de bracelet de montre.

29. Composant d'habillage (100) selon la revendication 20, **caractérisé en ce qu'**il est un fermoir de montre.

30. Pièce d'horlogerie ou montre (1000), comportant au moins un composant d'habillage (100) selon l'une des revendications 20 à 29.

## Patentansprüche

1. Verfahren zum Herstellen einer Uhrenausstattungskomponente (100), in dem:
- eine metallische Grundplatte (10) bereitgestellt wird, die aus einem ersten Material hergestellt ist, das Titan und/oder eine erste Titanlegierung ist,
- mindestens eine metallische Abdeckplatte (20) bereitgestellt wird, die aus einem zweiten Material hergestellt ist, wobei das zweite Material ein zweites Metall, das aus Gold und Platin und Palladium gewählt ist, und/oder eine zweite Legierung, die zumindest Gold oder Platin oder Palladium enthält, umfasst,
**gekennzeichnet dadurch, dass**:
- die mindestens eine Abdeckplatte (20) mit einer Dicke (E) hergestellt wird, die größer oder gleich 0,5 mm ist;
- die mindestens eine Abdeckplatte (20) ohne Materialeintrag auf die Grundplatte (10) geschweißt wird in einer Weise, dass ein Bimetall-Rohling (30) gebildet wird, indem die Abdeckplatte (20) und die Grundplatte (10) auf eine Temperatur gebracht werden, die höher als die Schmelztemperatur der Abdeckplatte (20) und die Schmelztemperatur der Grundplatte (10) ist;
- anschließend der Bimetall-Rohling (30) angepasst und/oder bearbeitet wird, um der Strukturkomponente (100) ihre endgültige Form zu geben.

2. Verfahren nach Anspruch 1, **dadurch gekennzeichnet, dass** als das erste Material eine Titanlegierung gewählt wird, die Titan vom "Grad 2" oder Titan vom "Grad 5" oder Titan "T35" ist.

3. Verfahren nach Anspruch 1 oder 2, **dadurch gekennzeichnet, dass** vor dem Schweißvorgang eine ebene Grundplatte (10) bereitgestellt wird und dass vor dem Schweißvorgang eine ebene Abdeckplatte (20) bereitgestellt wird und dass der Schweißvorgang zwischen der Grundplatte (10) und der Abdeckplatte (20) flach aufeinander liegend ausgeführt wird.

4. Verfahren nach einem der Ansprüche 1 bis 3, **dadurch gekennzeichnet, dass** die erste Legierung und die zweite Legierung mit einem Nickelanteil von null gewählt werden.

5. Verfahren nach einem der Ansprüche 1 bis 4, **dadurch gekennzeichnet, dass** als das zweite Material eine Goldlegierung mit 18 Karat oder eine Platinlegierung mit mindestens 95 % Platin oder eine Palladiumlegierung mit mindestens 75 % Palladium gewählt wird.

6. Verfahren nach Anspruch 5, **dadurch gekennzeichnet, dass** für das zweite Material eine Goldlegierung mit 18 Karat des Typs "5N" gewählt wird.

7. Verfahren einem der Ansprüche 1 bis 6, **dadurch gekennzeichnet, dass** der Bimetall-Rohling (30) durch Pressformen und/oder Ziehformen angepasst wird.

8. Verfahren nach einem der Ansprüche 1 bis 7, **dadurch gekennzeichnet, dass** der Bimetall-Rohling (30) bearbeitet wird, um die Abdeckplatte (20) räumlich begrenzt abzutragen.

9. Verfahren nach einem der Ansprüche 1 bis 8, **dadurch gekennzeichnet, dass** die Grundplatte (10) in Form eines Profils (11) gewählt wird.

10. Verfahren nach einem der Ansprüche 1 bis 9, **dadurch gekennzeichnet, dass** eine vorbearbeitete Abdeckplatte (20) mit mindestens einem Ausschnitt (21) und/oder einer Durchgangsöffnung (22) gewählt wird.

11. Verfahren nach einem der Ansprüche 1 bis 10, **dadurch gekennzeichnet, dass** die Grundplatte (10) und die Abdeckplatte (20), bevor sie miteinander verschweißt werden, mit Relief- und/oder Hohlmarkierungen (15; 25) versehen werden, um sie vor dem Schweißvorgang geometrisch aufeinander auszurichten und um sie während des Schweißvorgangs relativ zueinander zu halten.

12. Verfahren nach einem der Ansprüche 1 bis 11, **dadurch gekennzeichnet, dass** die Abdeckplatte (20) auf Höhe der gesamten gemeinsamen Kontaktfläche auf die Grundplatte (10) geschweißt wird.

13. Verfahren nach einem der Ansprüche 1 bis 11, **dadurch gekennzeichnet, dass** die Abdeckplatte (20) auf Höhe nur eines Teils der Oberfläche (26) der Abdeckplatte (20), die der Grundplatte (10) zugewandt ist, und/oder auf Höhe nur eines Teils der Oberfläche (16) der Grundplatte (10), die der Abdeckplatte (10) zugewandt ist, auf die Grundplatte (10) geschweißt wird.

14. Verfahren nach Anspruch 13, **dadurch gekennzeichnet, dass** das Schweißen unter der Oberfläche auf Höhe der Verbindungsfläche (S0) zwischen der Abdeckplatte (20) und der Grundplatte (10) ausgeführt wird.

15. Verfahren nach einem der Ansprüche 1 bis 14, **dadurch gekennzeichnet, dass** das Schweißen per Laser ausgeführt wird.

16. Verfahren nach einem der Ansprüche 1 bis 14, **dadurch gekennzeichnet, dass** das Schweißen per Ultraschall ausgeführt wird.

17. Verfahren nach einem der Ansprüche 1 bis 16, **dadurch gekennzeichnet, dass** vor dem Schweißen der Abdeckplatte (20) auf die Grundplatte (10) auf die Abdeckplatte (20) und/oder die Grundplatte (10) eine mechanische Verformungswirkung ausgeübt wird, um sie an der Grundplatte (10) oder entsprechend an der Abdeckplatte (20) zu crimpen.

18. Verfahren nach Anspruch 17, **dadurch gekennzeichnet, dass** die mechanische Verformungswirkung an der Abdeckplatte (20) vorgenommen wird.

19. Verfahren nach einem der Ansprüche 1 bis 18, **dadurch gekennzeichnet, dass** es auf die Herstellung einer Ausstattungskomponente (100) angewendet wird, die eine Uhrengehäuse-Klammer ist, und dass:
- eine Grundplatte (10) aus Titan oder einer Titanlegierung aus einer Folie oder einer Platte mit Ausstanzungen (13) und Durchgangsöffnungen (12) gestanzt wird, derart, dass eine Leiterstruktur mit seitlichen Abstützoberflächen (14), die durch Querträger (18) verbunden sind, gebildet wird;
- die Querträger (18) umgebogen werden, um Bügel (19) zu bilden,
- zwei Abdeckplatten (20) aus Gold auf die seitlichen Abstützoberflächen (14) der Grundplatte (10) geschweißt werden, um einen Bimetall-Rohling (30) zu bilden;
- ein Abschnitt (35) des Bimetall-Rohlings (30) gestanzt wird;
- der Abschnitt (35) durch Verformen angepasst wird, um die Klammer (100) zu bilden.

20. Uhren-Ausstattungskomponente (100) aus einem bimetallischen Material, die eine metallische Grundplatte (10), die aus einem ersten Material hergestellt ist, das Titan und/oder eine erste Titanlegierung enthält, und mindestens eine metallische Abdeckplatte (20) umfasst, die aus einem zweiten Material hergestellt ist, das ein zweites Metall, das aus Gold und Platin und Palladium gewählt ist, und/oder eine zweite Legierung, die zumindest Gold oder Platin oder Palladium enthält, **dadurch gekennzeichnet, dass** das erste Material kein Nickel enthält und dass die Abdeckplatte (20) mit der Grundplatte (10) auf Höhe mindestens eines verschweißten Mikrostrukturbereichs, dessen Mikrostruktur von der Mikrostruktur der Abdeckplatte (20) und von der Mikrostruktur der Grundplatte (10) verschieden ist, direkt in Kontakt ist, und **dadurch gekennzeichnet, dass** die Abdeckplatte (20) eine Dicke (E) besitzt, die größer oder gleich 0,5 mm ist.

21. Ausstattungskomponente (100) nach Anspruch 20, **dadurch gekennzeichnet, dass** das erste Material eine Titanlegierung ist, die Titan vom "Grad 2" oder Titan vom "Grad 5" oder Titan "T35" ist.

22. Ausstattungskomponente (100) nach Anspruch 20 oder 21, umfassend zwei Abdeckplatten (20) aus einer Gold- oder Platin- oder Palladiumlegierung, die beiderseits einer Grundplatte (10) aus Titan oder einer Titanlegierung verschweißt sind.

23. Ausstattungskomponente (100) nach Anspruch 20 oder 21, **dadurch gekennzeichnet, dass** die Abdeckplatte (20) und die Grundplatte (10) auf Höhe ihrer gesamten gemeinsamen Kontaktoberfläche miteinander verschweißt sind.

24. Ausstattungskomponente (100) nach Anspruch 20 oder 21, **dadurch gekennzeichnet, dass** die Abdeckplatte (20) und die Grundplatte (10) auf Höhe nur eines Teils der Oberfläche (26) der Abdeckplatte (20), die der Grundplatte (10) zugewandt ist, und/oder auf Höhe nur eines Teils der Oberfläche (16) der Grundplatte (10), die der Abdeckplatte (20) zugewandt ist, miteinander verschweißt sind.

25. Ausstattungskomponente (100) nach einem der Ansprüche 20 bis 24, **dadurch gekennzeichnet, dass** sie eine Uhrenklammer ist.

26. Ausstattungskomponente (100) nach einem der Ansprüche 20 bis 24, **dadurch gekennzeichnet, dass** sie eine Uhrenlünette ist.

27. Ausstattungskomponente (100) nach einem der Ansprüche 20 bis 24, **dadurch gekennzeichnet, dass** sie ein Uhrengehäuse ist.

28. Ausstattungskomponente (100) nach einem der Ansprüche 20 bis 24, **dadurch gekennzeichnet, dass** sie ein Glied eines Uhrenarmbands ist.

29. Ausstattungskomponente (100) nach Anspruch 20, **dadurch gekennzeichnet, dass** sie eine Uhrenschließe ist.

30. Zeitmessgerät oder Uhr (1000), umfassend mindestens eine Ausstattungskomponente (100) nach einem der Ansprüche 20 bis 29.

## Claims

1. Method of manufacturing an external timepiece component (100), wherein:
- there is provided a metallic base (10) made of a first material which is titanium and/or a first titanium alloy,
- there is provided at least one metallic cover plate (20) made of a second material, said second material including a second metal chosen from among gold and platinum and palladium and/or a second alloy including at least gold or platinum or palladium,
**characterized in that**:
said at least one cover plate (20) is produced with a thickness (E) greater than or equal to 0.5 millimetres;
- said at least one cover plate (20) is welded, without filler material, to said base (10) to form a bimetallic blank (30), by bringing said cover plate (20) and said base (10) to a temperature higher than the melting temperature of said cover plate (20) and than the melting temperature of said base (10);
- then said bimetallic blank (30) is shaped and/or machined to give said structural component (100) the final form thereof.

2. Method according to claim 1, **characterized in that** a titanium alloy which is grade 2 titanium, or grade 5 titanium or T35 titanium is selected as said first material.

3. Method according to claim 1 or 2, **characterized in that** there is provided a said base (10) which is flat prior to its welding operation, and there is provided a said cover plate (20) which is flat prior to the welding operation, and said welding operation between said base (10) and said cover plate (20) is performed in a flat position.

4. Method according to one of claims 1 to 3, **characterized in that** said first alloy and said second alloy are selected with no nickel content.

5. Method according to one of claims 1 to 4, **characterized in that** an 18-carat gold alloy or a platinum alloy with at least 95% platinum or a palladium alloy with at least 75% palladium is selected as said second material.

6. Method according to claim 5, **characterized in that** an 18-carat 5N gold alloy is selected as said second material.

7. Method according to one of claims 1 to 6, **characterized in that** said bimetallic blank (30) is shaped by deformation by stamping and/or by drawing.

8. Method according to one of claims 1 to 7, **characterized in that** said bimetallic blank (30) is machined to locally remove said cover plate (20).

9. Method according to one of claims 1 to 8, **characterized in that** said base (10) is selected in the form of a profile bar (11).

10. Method according to one of claims 1 to 9, **characterized in that** said cover plate (20) is pre-machined with at least one cutout (21) and/or through aperture (22).

11. Method according to one of claims 1 to 10, **characterized in that**, prior to being welded to one another, said base (10) and said cover plate (20) are prepared with raised and/or hollow points of reference (15; 25) for the geometric matching of said base and said plate before said welding operation and for holding said base and said plate to each other during said welding operation.

12. Method according to one of claims 1 to 11, **characterized in that** said cover plate (20) is welded to said base (10) over the entire common contact surface thereof.

13. Method according to one of claims 1 to 11, **characterized in that** said cover plate (20) is welded to said base (10) on only one portion of the surface (26) of said cover plate (20) facing said base (10), and/or on only one portion of the surface (16) of said base (10) facing said cover plate (20).

14. Method according to claim 13, **characterized in that** said welding is performed just below the joining surface (S0) between said cover plate (20) and said base (10).

15. Method according to one of claims 1 to 14, **characterized in that** said welding is laser welding.

16. Method according to one of claims 1 to 14, **characterized in that** said welding is ultrasonic welding.

17. Method according to one of claims 1 to 16, **characterized in that**, prior to welding said cover plate (20) to said base (10), there is performed on at least said cover plate (20) or said base (10) a mechanical deformation action for the crimping thereof respectively to said base (10) or to said cover plate (20).

18. Method according to claim 17, **characterized in that** said mechanical deformation action is performed on said cover plate (20).

19. Method according to one of claims 1 to 18, **characterized in that** it is applied to the making of a said external component (100) which is a watch case claw, and **in that**:
- a base (10) made of titanium or titanium alloy is cut from a sheet or board, with cutouts (13) and through apertures (12), so as to form a ladder-like structure with lateral support surfaces (14) connected by cross-pieces (18);
- said cross-pieces (18) are folded to form yokes (19),
- two gold cover plates (20) are welded to said lateral support surfaces (14) of said base (10), to form a bimetallic blank (30);
- a section (35) of said bimetallic blank (30) is cut;
- said section (35) is shaped by deformation to form said claw (100).

20. External timepiece component (100), made of bimetallic material including a metallic base (10) made of a first material including titanium and/or a first titanium alloy, and at least one metallic cover plate (20) made of a second material including a second metal selected from among gold and platinum and palladium and/or a second alloy including at least gold or platinum or palladium, **characterized in that** said first material is nickel free and **in that** said cover plate (20) is directly in contact with said base (10) on at least one welded area whose microstructure is different from the microstructure of said cover plate (20) and from the microstructure of said base (10), and **characterized in that** said cover plate (20) is of a thickness E greater than or equal to 0.5 millimetres.

21. External component (100) according to claim 20, **characterized in that** said first material is a titanium alloy which is grade 2 titanium or grade 5 titanium or T35 titanium.

22. External component (100) according to claim 20 or 21, including two said cover plates (20) made of a gold or platinum or palladium alloy welded to both sides of a said base (10) made of titanium or titanium alloy.

23. External component (100) according to claim 20 or 21, **characterized in that** said cover plate (20) and said base (10) are welded to each other over the entire common contact surface thereof.

24. External component (100) according to claim 20 or 21, **characterized in that** said cover plate (20) and said base (10) are welded to each other on only one portion of the surface (26) of said cover plate (20) facing said base (10), and/or on only one portion of the surface (16) of said base (10) facing said cover plate (20).

25. External component (100) according to one of claims 20 to 24, **characterized in that** it is a watch claw.

26. External component (100) according to one of claims 20 to 24, **characterized in that** it is a watch bezel.

27. External component (100) according to one of claims 20 to 24, **characterized in that** it is a watch case.

28. External component (100) according to one of claims 20 to 24, **characterized in that** it is a watch bracelet link.

29. External component (100) according to claim 20, **characterized in that** it is a watch clasp.

30. Timepiece or watch (1000) including at least one external component (100) according to one of claims 20 to 29.
